(19) 

Europäisches
Patentamt
European
Patent Office
Office européen
des brevets

(11) **EP 3 210 949 A1**

(12) **EUROPEAN PATENT APPLICATION**

(43) Date of publication:
**30.08.2017 Bulletin 2017/35**

(51) Int Cl.:
***C04B 28/00*** (2006.01)     ***C04B 28/32*** (2006.01)
***C04B 111/00*** (2006.01)

(21) Application number: **17157937.8**

(22) Date of filing: **24.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **26.02.2016   IT UB20161124**

(71) Applicant: **Desamanera S.r.l.**
**45100 Rovigo (RO) (IT)**

(72) Inventors:
• **CONTE, Alberto**
  **I-35020 Terrassa Padovana (PD) (IT)**
• **ITALIANO, Antonino**
  **I-45100 Rovigo (RO) (IT)**
• **COLOMBO, Paolo**
  **I-35100 Padova (PD) (IT)**
• **GROSSI, Luca**
  **I-31050 Morgano (TV) (IT)**

(74) Representative: **Gallo, Luca**
  **Gallo & Partners S.r.l.**
  **Via Rezzonico, 6**
  **35131 Padova (IT)**

(54) **BINDER WITH MAGNESIC BASE AND PROCESS FOR THE ADDITIVE PRODUCTION OF MANUFACTURED ITEMS WITH SUCH BINDER**

(57)     Binder for the additive production of manufactured items, in particular made of conglomerate, adapted to be distributed on a layer of inert granular material in order to form a rigid matrix incorporating the granules of the inert granular material. The binder according to the invention is a substantially inorganic hydraulic binder with magnesium phosphate cement base. Also forming the object of the present invention is a process for the additive production of manufactured items by means of the use of the aforesaid binder and the use of a hydraulic binder with magnesium phosphate cement base as binder in the additive production of manufactured items.

**Fig. 1**

EP 3 210 949 A1

**Description**

Field of application

The present invention regards a binder with magnesic base adapted to be employed for the additive production of manufactured items, as well as a process for producing such manufactured items.

The binder and the process, object of the present invention, are inserted in the industrial field of additive production, in particular by means of 3D printing, of manufactured items preferably made of conglomerate and stone.

State of the art

As is known, processes for producing, by means of 3D printing, manufactured items made of conglomerate or stone have been available on the market for some time.

In particular, processes are known which provide for the deposition of granular material layers in succession and the spraying, on pre-selected zones of each layer, of a binder, for the purpose of selectively impregnating the granular material and forming, following the hardening of the binder, the cross sections of a final manufactured item.

Binders of different nature are currently employed in the processes described briefly above.

In particular, it is known to use organic binders, such as epoxy or polyurethane resins, as taught in the Italian patent No. IT 1358953. Such binders, nevertheless, are characterized by a high cost and a poor environmental compatibility.

It is also known to use inorganic air binders. The Italian patent No. IT 1395207 teaches for example to use a binder with magnesic base obtained from the mixture of two components: magnesium oxide and magnesium chloride. Such components, through a strongly exothermic reaction, lead to the formation of a magnesium oxychloride cement, known as Sorel cement. The process for the additive production of manufactured items described in patent No. IT 1395207 in particular provides that the powder magnesium oxide is dispersed in the granular material to form a mixture therewith and that an aqueous solution of magnesium chloride is sprayed on the mixture in order to react with the magnesium oxide and form a rigid cement matrix characterized by the presence of compounds in the $MgO\text{-}MgCl_2\text{-}H_2O$ system.

However, Sorel cement is an air binder and as such it has poor strength with prolonged water contact, such that the contexts of use of the manufactured items made therewith are strongly limited. In addition, the presence of chlorides, brought by the binder, render the manufactured items made by means of the above-described process incompatible with the steel usable, for example, for reinforcing the structures.

A further drawback is given by the fact that the manufactured items obtained with the above-described binder have in practice shown to be provided with density and with mechanical and durability properties that are not completely satisfactory.

Presentation of the invention

The problem underlying the present invention is therefore that of overcoming the drawbacks manifested by the abovementioned solutions of known type, by providing a binder of inorganic nature with magnesic base for the additive production of manufactured items, in particular made of conglomerate, which allows making manufactured items provided with optimal mechanical properties, hardness and strength properties even in contact with water.

A further object of the present invention is to provide a hydraulic binder with magnesic base for the additive production of manufactured items, which is also achieved starting from raw materials that are inexpensive and characterized by an optimal environmental compatibility.

Another object of the present invention is to provide a binder with magnesic base for the additive production of manufactured items, which can also be employed for making manufactured items adapted to remain in prolonged contact with water or with steel.

A further object of the present invention is to provide a process for the additive production of manufactured items, which is simple and inexpensive to make and use.

Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:

- Figure 1 shows a schematized front view of an apparatus for making manufactured items by means of an additive process according to the present invention, in accordance with a first embodiment;
- Figure 2 shows a schematized front view of an apparatus for making manufactured items by means of an additive process according to the present invention, in accordance with a second embodiment.

Detailed description

The binder and the process according to the present invention are intended to be advantageously employed for the additive production of manufactured items.

More in detail, the present binder and the process are adapted to be used for making manufactured items by means of 3D printing, in particular with a jetting technique, i.e. spraying, (i.e. an indirect 3D printing technique), which provides that the manufactured items are made by spraying or simply depositing a binder in liquid form or a precursor in liquid form on a constantly renewed powder bed.

The binder according to the present invention is adapted for the additive production of manufactured items in particular made of conglomerate and for such purpose is adapted to be distributed on a layer of inert granular material in order to form a rigid matrix incorporating the granules of the latter.

With the expression "granular material" it is intended herein to indicate any incoherent material suitable for 3D printing by means of jetting technique and for such purpose having a grain size adapted for creating a renewable powder bed, lacking significant defects and susceptible of forming a cohesive material when sprayed with a binder (or a precursor of a binder) in liquid or semi-liquid form. Such granular material can contain different-size powder material as well as, for example, material in the form of fibers, of platelets or with other form factors. The material can have inorganic nature (e.g. powders of different rocks or of metallic nature) or contain organic parts, as will be better specified hereinbelow.

In accordance with the idea underlying the present invention, the binder is a substantially inorganic hydraulic binder with magnesium phosphate cement base.

With the expression "substantially inorganic" it is herein intended to indicate that the binder is constituted by inorganic compounds, and can comprise minimum quantities of organic compounds, which however do not exceed 30% by weight of the binder overall, without departing from the protective scope defined by the present patent.

In addition, with the expression "with magnesium phosphate cement base" it is intended to indicate that the binder according to the invention is constituted for at least 70% by weight, and preferably for at least 90% by weight, by magnesium phosphate cement, and able to contain organic or inorganic additives for the remaining percentage by weight. The magnesium phosphate cement is a magnesic cement substantially constituted by magnesium oxide (MgO), in particular made of powder, and one or more phosphates, also in particular made of powder, susceptible of reacting in water in order to form a cement paste which, following setting and hardening, is adapted to form a rigid matrix. In particular, the binder according to the present invention advantageously comprises an acidic phosphate, such as an ammonium phosphate or, preferably, potassium phosphate. The reaction between magnesium oxide and phosphate in water is very quick and exothermic and leads to the formation of reaction products that can be represented by the formula, $Mg(X_2PO_4)_2 \cdot nH_2O$ or $MgXPO_4 \cdot nH_2O$, where X is hydrogen (H), ammonium ($NH_4$), sodium (Na) or potassium (K), in accordance with the phosphate or phosphates comprised in the cement.

In accordance with an advantageous embodiment, the binder according to the invention comprises magnesium oxide and phosphate (or phosphates) in a ratio by weight of 1:1.

The magnesium oxide and the phosphate of the binder according to the invention, following the addition of water preferably in a quantity comprised between 15% and 45% of the total weight of magnesium oxide and phosphate, are susceptible of reacting in order to lead to the formation of hydrated compounds.

Surprisingly, the binder with magnesium phosphate cement base has proven suitable for being employed as binder in the additive production of manufactured items, in particular by means of 3D printing and more precisely by means of jetting technique.

More in detail, the magnesium oxide and the selected phosphate or phosphates, simply added to the granular material and hydrated, have proven suitable for generating a rigid matrix incorporating the granules of granular material and suitable for conferring an optimal cohesion to the final conglomerate thus obtained, without it being necessary for such purpose to execute a close mixing between the granular material, the binder and the dose of water required for the hydration thereof, as usually occurs in making cement conglomerates by means of the conventional mixing and casting techniques.

In particular the binder according to the present invention allows obtaining very cohesive manufactured conglomerate items, provided with mechanical characteristics that are improved with respect to the mechanical characteristics of the manufactured conglomerate items obtained via 3D printing, by means of jetting technique and employing known binders of different nature and in particular different inorganic binders, also with magnesic base, such as Sorel cement, as shown in the embodiment reported hereinbelow.

With respect to the other inorganic binders currently employed in the additive production of manufactured items, the binder with magnesium phosphate cement base according to the present invention has the advantage of being a hydraulic binder which, unlike the known inorganic air binders, is capable of hardening in permanent contact with the water and allows making manufactured items that can remain in permanent contact with the water.

The binder with magnesium phosphate cement base according to the present invention also allows obtaining manufactured items by means of additive production, in particular via 3D printing, provided with a more compact microstructure, with a smaller porosity and hence provided with greater hardness with respect to manufactured items obtained by means of the use of known inorganic binders, in particular with magnesic base, such as Sorel cement.

A further important advantage of the binder with magnesium phosphate cement base according to the present invention with respect to other binders with magnesic base, such as in particular Sorel cement, lies in the increasing setting rapidity, which makes it a binder particularly adapted for being used in the additive achievement of manufactured items, also allowing limiting the production times.

The binder with magnesium phosphate cement base according to the present invention, therefore, in addition to providing a final compressive strength that is relatively high, also ensures good early compressive strength, such that it has proven particularly adapted for being employed in 3D printing.

Advantageously, for the purpose of further increasing the setting rapidity, the binder according to the present invention comprises highly reactive magnesium oxide.

In particular, in accordance with a first embodiment, such highly reactive magnesium oxide is a powder magnesium oxide having average grain size less than 100 $\mu$m and preferably less than 70 $\mu$m and equal to 50.

In accordance with a second embodiment, such highly reactive magnesium oxide is a powder magnesium oxide obtained via calcination at temperatures up to 1000°C. The magnesium oxide obtained via calcination at such temperatures, in fact, has grains of smaller size than the grains of the magnesium oxide obtained via calcination at temperatures greater than 1000°C and a greater porosity of the single grains, so as to be characterized by a greater reactivity.

Preferably the phosphate present in the binder according to the present invention has average grain size less than 100 $\mu$m, for the purpose of facilitating the reaction with the magnesium oxide.

By means of a careful selection of the raw materials, i.e. in particular of the average grain size and of the quality of the magnesium oxide and phosphate present in the binder according to the invention, it is possible to adjust the reaction speed therebetween and hence the setting and hardening times of the cement paste obtained starting from the binder.

In accordance with one possible embodiment thereof, the binder according to the present invention comprises one or more retardant setting additives, such as boric acid or a polymer with time-release of water, adapted to delay the start of the setting reaction between magnesium oxide and phosphate. The binder according to the latter embodiment is in particular adapted to be employed for making large-size manufactured items for the purpose of preventing the onset of large temperature gradients between different zones of the manufactured item, given that the reaction between magnesium oxide and phosphate is strongly exothermic.

Preferably, such retardant additives are in powder form so as to be easily mixed with the magnesium oxide and with the powder phosphate or solubilized in the hydration water thereof.

The binder according to the invention can also comprise further or different additives suitably selected as a function of the characteristics of the specific selected magnesium oxide and phosphate, as well as of the characteristics of the final manufactured item which one wishes to obtain in order to optimize one or more of such characteristics. For example, additives could be present in the binder according to the invention that are adapted to improve the mechanical strength of the final manufactured item, such as potassium silicates or other alkaline silicates that lead to the formation of insoluble silicates in the final structure of the hardened matrix, therefore conferring increased mechanical strength and impermeability to the matrix itself.

Also forming an object of the present invention is a process for the additive production of manufactured items, in particular by means of 3D printing with jetting technique, making use of a binder with magnesic base, in particular of the above-described type.

The process according to the present invention comprises the following operating steps described hereinbelow.

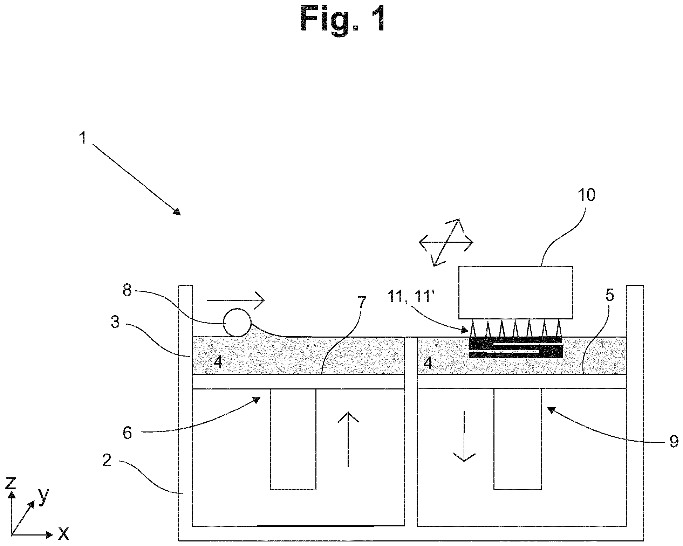

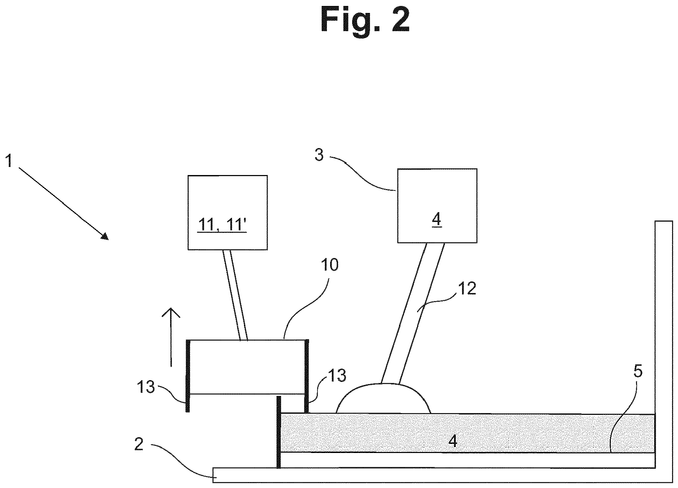

Advantageously, a step is first provided for computer modeling the structure of the final manufactured item that one wishes to obtain by means of the use of CAD design programs, capable of reconstructing a 3D model of the desired manufactured item. The latter is divided into successive cross sections ordered from bottom to top, delimited by planes parallel and orthogonal to the vertical, in particular equidistant from each other according to a predetermined pitch, in a manner such that such sections, printed in sequence, come to form the designed structure. Each cross section of the 3D model comprises solid and void areas, corresponding to the solid and void parts of the structure. An initial step is also advantageously provided for arranging an apparatus 1 for 3D printing by means of jetting technique, which is schematically represented in the enclosed Figures 1 and 2 respectively in accordance with a first and a second possible embodiment of such apparatus 1.

The apparatus 1 comprises a support structure 2 having, associated therewith, a tank 3 for containing a mixture in granular form 4 containing the inert granular material, as better explained hereinbelow. The support structure 2 also has, associated therewith, a work surface 5 adapted to receive thereon successive layers of the granular mixture 4, coming from the tank 3, and such layers are distributed on the work surface 5 in a controlled manner.

More in detail, in the apparatus 1 in accordance with the first embodiment of figure 1, the tank 3 is arranged alongside the work surface 5, while in the apparatus 1 in accordance with the second embodiment of figure 2, the tank 3 can also be arranged in a remote position with respect to the work surface 5.

The tank 3 comprises means for positioning the granular mixture 4 towards the work surface 5.

In the first embodiment of figure 1, such positioning means comprise a first piston 6 adapted to lift the bottom 7 of the tank 3 along a vertical direction Z by a predefined pitch each time a new layer of granular mixture 4 must be deposited on the work surface 5, and a distribution roller 8, adapted to push and compress a predetermined quantity of granular mixture 4 towards the work surface 5 in order to deposit a layer of granular mixture 4 thereon, i.e. on the previously-deposited layers. The work surface 5 is associated with a second piston 9, adapted to lower the work surface 5 by a predefined pitch each time a new layer of granular mixture 4, must be deposited thereon.

In the second embodiment of figure 2, such positioning means for example comprise a duct 12 for supplying the granular mixture 4 towards the work surface 5 and a distribution bar 13 adapted to distribute the inert material deposited by the supply duct 12 on the work surface 5.

The apparatus 1 also comprises a print head 10, adapted to selectively deposit on the work surface 5, or on each layer of granular mixture 4 deposited thereon, water 11 or an aqueous solution 11', as is better explained hereinbelow, adapted to allow the reaction between the components of the binder according to the invention in order to make a rigid matrix on the bed of granular mixture 4 that incorporates the granules of inert material and defines a corresponding cross section of the final manufactured item.

For such purpose, the print head 10 is moved on a plane XY parallel to the work surface 5, in particular along an axis X termed "quick axis" since it is that along which the print head 10 is moved, and along an axis Y, termed "slow axis" since it is that along which the head 5 is moved a few millimeters after having completely traveled along the axis X. In the second embodiment of figure 2, the work surface 5 is fixed and the print head 10 is lifted by a predefined pitch each time a new layer of granular mixture 4 must be deposited on the work surface 5. Advantageously, the distribution bar 13 for the inert material on the work surface 5 is associated with the print head 10 and is in particular arranged on the latter upstream of the spraying nozzles with respect to the advancing direction of the print head 10, as illustrated in Figure 2, so as to level and compress the granular mixture 4 before the water 11 or the aqueous solution 11' is released on the latter.

The process according to the present invention provides for a step of arranging an inert granular material, powder magnesium oxide, one or more powder phosphates and one or more doses of water.

The inert granular material is adapted to define the aggregate of the final conglomerate with which the manufactured item is obtained. The inert granular material can be selected as a function of the properties that one wishes to confer to the final manufactured item, i.e. as a function of the production or economical requirements. Inert materials which have proven particularly suitable for the production of manufactured items made of conglomerate by means of the process according to the invention are for example marble or rock powders in general, sand, and in any case even recycled materials can be used, such as bricks, tiles or plasters suitably ground, particles of metallic materials, such as metallic fibers, or other materials that are adapted for such purpose, without departing from the protective scope defined by the present patent.

The grain size of the inert material, which can be in the form of powders, fibers, platelets or with other form factors, as specified above, can be optimized for improving the strength of the final manufactured item and for ensuring the possibility to spread a uniform layer of powder. In addition, reinforcement materials such as fibers and minerals can be added to the inert granular material in order to increase the resilience and tendency of the finished manufactured item to be isotropic, which is instead reduced due to the stratification process. Organic materials can also be added to the powder bed in order to modify and optimize some properties of the inert granular material, i.e. of the solid manufactured item obtained therewith. For example, such additions of organic material can improve properties such as the absorption of impact energy, the thermal insulation or the acoustic insulation of the manufactured items.

In accordance with a preferred embodiment of the process according to the present invention, the granular material comprises two or more fractions, each having a different average grain size. This allows conferring improved mechanical properties to the final manufactured item, due to the presence of few voids between the granules of granular material and due to the fact that the total surface area of the aggregate granules is in any case not excessive and therefore does not require high quantities of water for completely wetting all the granules.

The magnesium oxide is preferably highly reactive, as previously specified, and for such purpose has average grain size less than 100 $\mu$m and/or is obtained via calcination at temperatures lower than 1000°C.

The phosphate is advantageously an acidic phosphate such as ammonium or potassium phosphate. The potassium phosphate is preferable since the reaction of the latter with magnesium oxide does not lead to the formation of undesired secondary products.

The arranged phosphate advantageously has an average grain size of at most 300 $\mu$m and, preferably, it even has an average grain size of less than 100 $\mu$m in order to facilitate the reactivity thereof with magnesium oxide.

In particular, if the magnesium oxide or the starting phosphate have an average grain size greater than the desired value, the arranging step can comprise a step of grinding the corresponding powder in order to reduce the average size of the particles constituting it. The powder magnesium oxide and the powder phosphate thus arranged are susceptible of reacting in the presence of the dose or doses of water in order to form a cement paste. For such purpose, water is arranged in one or more doses sufficient for ensuring the supply necessary for the correct hydration of the products of reaction between magnesium oxide and phosphate in the powder bed.

The process according to the invention also comprises a step of mixing at least the magnesium oxide with the inert granular material in order to obtain a powder granular mixture 4.

Preferably, the powder granular mixture 4 obtained from the step of mixing comprises magnesium oxide in a percentage by weight comprised between 15% and 40% and granular material in a percentage by weight comprised between 40% and 85%. Such proportion between the magnesium oxide, and hence between the binder, and the granular material has proven suitable for ensuring an optimal cohesion of the granules of granular material and simultaneously ensuring adequate mechanical properties for the final manufactured item.

More in detail, the desired magnesium content is first established as a function of the type and grain size of the inert granular material and as a function of the desired physical-mechanical characteristics for the final manufactured item, and consequently the equivalent content of phosphate is calculated. The percentages of inert material present in the granular mixture depend on the presence of phosphate, or lack thereof, in the same mixture, as will be better explained hereinbelow.

Then, the following are provided: a first step of distributing, on the work surface 5, a uniform layer of predetermined thickness of the granular mixture 4 and a second step of distributing phosphate on the work surface 5.

In particular, the phosphate is preferably brought in a quantity by weight such to ensure a ratio by weight of 1:1 between magnesium oxide and phosphate on the powder bed distributed on the work surface 5.

The process also comprises a step of selective impregnation of pre-selected areas of the layer with the dose or doses of water in order to define a corresponding cross section of a desired manufactured item. The supply of water on the layer comprising the granular material and the magnesium oxide, also in the presence of phosphate, allows activating the reaction between magnesium oxide and phosphate in order to lead to the formation of a cement paste that incorporates the granules of inert granular material and that, following the setting and hardening, constitutes a rigid matrix capable of conferring suitable mechanical characteristics to the manufactured item.

For such purpose, water is preferably supplied in a quantity comprised between 15% and 45% of the total weight of the magnesium oxide and phosphate present in the pre-selected areas of the layer that are intended to be impregnated therewith. Such quantity of water is sufficient to ensure the necessary supply so that the reaction between magnesium oxide and phosphate is as complete as possible, without however compromising the mechanical characteristics of the final manufactured item. A greater quantity of water, in fact, would facilitate the formation of a cement matrix that is more porous and hence provided with less-satisfactory mechanical characteristics.

In particular, the quantity of water to be supplied in the impregnation step is established also as a function of the type of inert granular material employed and of the grain size distribution thereof.

In accordance with one embodiment of the process according to the invention, the water employed in the impregnation step has a temperature less than 10°C, down to a minimum of 0.5°C. The supply of water at low temperature allows slowing the setting reaction. This is particularly advantageous for example in the making of manufactured items of large thickness where, due to the strongly exothermic reaction between magnesium oxide and phosphate, temperature gradients could be initiated in the manufactured item under production that could lead to the formation of cracks due to the overly rapid evaporation of water and/or due to thermal tensions.

The process according to the invention then provides that the first and the second distribution step as well as the selective impregnation step are repeated until all the cross sections of the desired manufactured item are defined, obtaining a formed manufactured item.

The process according to the present invention, due to the use of the binder with magnesium phosphate cement base, allows simply, quickly, automatically and inexpensively making manufactured items provided with improved mechanical properties, hardness and resistance in contact with water with respect to the manufactured items made with additive processes of known type employing inorganic air binders. According to one embodiment, the process also comprises a step of solubilizing at least one first fraction of phosphate in the dose (or in the doses) of water, in order to obtain an aqueous phosphate solution 11', that precedes the impregnation step and the second step of distributing phosphate (or phosphates) is therefore conducted simultaneously at least with the impregnation step, depositing the aqueous phosphate solution 11' on pre-selected areas of the layer.

According to a further embodiment, in the mixing step, magnesium oxide and at least one second fraction of phosphate (or phosphates) are mixed with the inert granular material in order to obtain the granular mixture 4 and the second step of distributing phosphate is conducted simultaneously with at least the first step of distributing the granular mixture 4, distributing, on the work surface 5, a uniform layer of predetermined thickness of the granular mixture 4 comprising both magnesium oxide and at least one second fraction of phosphate (or phosphates).

More clearly, the process according to the present invention comprises three possible embodiments described in detail hereinbelow.

In accordance with a first embodiment of the process according to the invention, only magnesium oxide (and possible other additives as specified above) is mixed with the granular material in order to obtain the granular mixture 4.

In accordance with such embodiment, the desired quantity of magnesium oxide is first established, with respect to the inert granular material, and then the corresponding granular mixture is made. If the desired quantity of magnesium oxide with respect to the inert granular material is for example 40% by weight, the granular mixture will be made with 40% by weight of magnesium oxide and 60% by weight of inert granular material, ignoring the weight of the possible additives introduced into the mixture.

According to such embodiment, the process also provides for the step of solubilizing all the phosphate (or phosphates) in the dose (or in the doses) of water in order to obtain an aqueous phosphate solution. In particular, the quantity of phosphate or phosphates to be solubilized in water is established as a function of the quantity of magnesium oxide, preferably in order to obtain a ratio by weight of 1:1 between the two components.

Such solubilization step precedes the second step of distributing phosphate on the work surface 5, i.e. on the previously-deposited layers, and the impregnation step. In such case, the second step of distributing phosphate and the impregnation step are conducted simultaneously by depositing the aqueous phosphate solution on pre-selected areas of the layer. Of course, one or more additives possibly present in the formulation of the binder can be added to the phosphate solution 11' rather than to the granular mixture 4, or they can be added to both.

In particular, the phosphate can be dissolved in water outside of the print head 10 and the already-formed solution can be sent to the latter, or the phosphate can be dissolved in water directly in the print head 10.

Such embodiment of the process according to the invention ensures a close contact between the magnesium oxide present in the bed of granular mixture 4 and the phosphate carried by the water. This facilitates a more complete reaction between the two components.

In accordance with a second different embodiment of the process according to the invention, both the magnesium oxide and all the phosphate or phosphates (and the possible other additives comprised in the binder) are mixed with the granular material in order to obtain the granular mixture 4.

In accordance with such embodiment, the desired quantity of magnesium oxide is first established, with respect to the inert granular material. Subsequently, the corresponding quantity of phosphate or phosphates is established, and then the formulation of the granular mixture to be made is calculated. If the desired quantity of magnesium oxide with respect to the inert granular material is for example 40% by weight, and wishing to introduce phosphate in a ratio by weight of 1:1 with the magnesium oxide, the granular mixture will be made with about 28% by weight of magnesium oxide, about 28% by weight of phosphate and about 44% by weight of inert granular material, ignoring the weight of the possible additives introduced into the mixture.

According to such embodiment, the first step of distributing the granular mixture 4 and the second step of distributing the phosphate on the work surface 5, i.e. on the previously-deposited layers, are conducted simultaneously by distributing, on the work surface 5 or on the preceding layers, a uniform layer of predetermined thickness of the powder mixture 4 comprising both magnesium oxide and phosphate. In such case, in the impregnation step, only water 11 is distributed on the pre-selected areas of the layer in order to define a corresponding cross section of the desired manufactured item.

This second embodiment of the process according to the present invention has in practice proven to be more advantageous. Indeed, in the first embodiment, given the limited solubility of the phosphate in water, in order to ensure the correct supply of phosphate adapted to allow as complete a reaction as possible of the magnesium oxide present in the granular mixture 4, it is necessary to also increase the water supply, to the detriment of the printing resolution, given the tendency of the excess water to spread between the granules of the granular mixture, and to the detriment of the mechanical characteristics of the final manufactured item. The second embodiment therefore solves this problem, since it is not necessary to solubilize the phosphate in the dose (or in the doses) of water.

In accordance with a third embodiment thereof, the process according to the invention provides for a step of solubilizing only a first fraction of phosphate (or phosphates) in the dose (or doses) of water in order to obtain an aqueous phosphate solution, while the second remaining fraction of phosphate is mixed, together with the magnesium oxide, with the granular material in order to obtain the granular mixture 4. The possible additives comprised in the binder can be added to the aqueous solution, to the granular mixture 4 or to both.

According to such embodiment, the second step of distributing phosphate on the work surface 5, i.e. on the previously-deposited layers, is conducted simultaneously with the first step of distributing the granular mixture 4 and with the impregnation step, a uniform layer of predetermined thickness of the powder mixture 4 comprising magnesium oxide, phosphate and the aqueous solution (it too comprising phosphate) being distributed on the work surface 5 or on the preceding layers.

The latter embodiment of the process according to the invention ensures a close contact between the magnesium oxide present in the bed of granular mixture 4 and the phosphate carried by the water, facilitating a more complete reaction between the two components, without however involving an excessive supply of water, since not all the phosphate must be solubilized in water. This ensures an optimal print definition and optimal mechanical characteristics of the final manufactured item.

In operation, the granular mixture 4, comprising only magnesium oxide or comprising both magnesium oxide and phosphate, is arranged within the tank 3 of the apparatus 1.

An aqueous solution containing phosphate 11' or simple water 11 is respectively arranged within a containment tank associated with the print head 10 of the apparatus 1. In particular, the containment tank can be arranged on the print head 10 or positioned outside the print head and be transported thereto by means of suitable ducts.

In the first distribution step, a uniform layer of predetermined thickness of the granular mixture 4 is distributed on the work surface 5. In particular, during such distribution step, a dose of granular mixture 4, comprising the granular material and the magnesium oxide or also comprising phosphate, is released on the work surface 5, or on the layers previously formed on the work surface 5, and distributed thereon.

In accordance with the first embodiment of the apparatus of figure 1, following the elevation of the bottom 7 of the tank 3 by means of the first piston 6, the distribution roller 8 of the tank 3 pushes a predetermined quantity of granular mixture 4 towards the work surface 5 in order to create thereon, or on a previously deposited layer, the aforesaid layer of predetermined thickness.

In accordance with the second embodiment of the apparatus of figure 2, the desired dose of granular form mixture 4 is released by the supply duct 12 on the work surface 5 and is then distributed on the latter to form a substantially uniform thickness by means of the distribution bar 13.

In the subsequent step of selective impregnation of pre-selected areas of the layer of granular mixture 4, simple water 11 or an aqueous phosphate solution 11' in water, is deposited on the aforesaid pre-selected areas of the layer of granular mixture 4 in order to define a corresponding cross section of a desired manufactured item, impregnating the inert granular material and forming, following the reaction between the magnesium oxide and the phosphate in the presence of water, a rigid matrix that incorporates the granules of inert material.

In particular, during the impregnation step, the print head 10 is moved in a controlled manner, for example by means of a non-illustrated control unit, along the orthogonal axes X, Y parallel to the work surface 5, and hence to the layer of granular form mixture 4 deposited thereon, according to the characteristics of the structure of the manufactured item that one wishes to obtain, recorded in a computer file. Water 11 or the aqueous phosphate solution 11' is then selectively released or sprayed by the print head 10 on the pre-selected areas of the layer of granular mixture 4.

Advantageously, during the spraying, the print head 10 is maintained at a distance comprised between 8 and 10 cm from the free surface of the granular mixture 4, in order to ensure an improved printing resolution.

As previously specified, the above-described steps are repeated until all the cross sections of the desired manufactured item are defined, thus obtaining a formed manufactured item.

Advantageously, the process according to the invention can comprise, at the end of the repetition of the distribution and impregnation steps, a step of thermal treatment of the formed manufactured item in order to lead to the formation of ceramic phases in the latter. Advantageously such heat treatment can be conducted by heating the formed manufactured item at a temperature comprised between 100°C and 1500°C.

Such thermal treatment can also be executed during the use of the manufactured item itself, if the latter is intended to be used at a temperature comprised in the above-reported range.

The manufactured items obtained at the end of the distribution and impregnation steps, hence, can be simply left to rest for a suitable time period that depends on the quality and quantity of employed binder and on the ratio by weight of the latter with the granular material, e.g. comprised between a minimum of 2-3 hours up to a maximum of 24 hours, in order to allow the reactions of setting and hardening of the cement paste obtained from the reaction between magnesium oxide and phosphate to be completed and the matrix thus formed to be hardened, or they can be further subjected to a thermal treatment, as a function of the characteristics desired in the final manufactured item.

Also forming the object of the present invention is the use of a substantially inorganic hydraulic binder with magnesium phosphate cement base as binder for the additive production of manufactured items made of conglomerate by means of 3D printing, in particular by means of jetting technique.

Embodiment:

Hereinbelow, an embodiment is described relative to a binder and to a process in accordance with the present invention, and the results of the mechanical characterization tests executed on the obtained manufactured items are reported hereinbelow.

In the example reported herein, a binder was used comprising magnesium oxide and potassium phosphate, both made of powder, in a ratio by weight of 1:1.

Magnesium oxide was selected having an average grain size less than 100 $\mu$m and in particular with average values close to 50 $\mu$m.

Potassium phosphate was also selected having an average grain size equal to about 300 $\mu$m. The latter was subjected to a step of manual grinding for the purpose of obtaining a powder with an average grain size less than 100 $\mu$m.

As inert granular material, an inert powder of "Bianco di Zandobbio", or Dolomite was also arranged, 1/3 by weight having an average grain size, i.e. comprised between 0.70 and 1.2 mm, and 2/3 by weight having a fine grain size, i.e. comprised between 0.20 and 0.70 mm.

The magnesium oxide was added to the inert granular material and mixed therewith in order to obtain a granular mixture composed as follows: 20% by weight of magnesium oxide and 80% by weight of inert granular material.

Phosphate was also added to the mixture in the same quantity by weight as the magnesium oxide in order to obtain a ratio of 1:1 between the two components.

The mixture thus obtained was distributed on a work surface. On pre-selected areas of the powder bed, a dose of water was sprayed, in a quantity equal to about 30% of the total weight of magnesium oxide and phosphate of the mixture calculated for the pre-selected areas of the layer deposited on the work surface.

The steps of distributing the granular mixture on the work surface and of spraying water on the bed of renewed granular mixture were repeated until all the cross sections are obtained of a substantially cubic sample, with about 2 cm side.

Each of the samples thus obtained was subjected to compressive strength tests, by using an Instron instrument with stainless steel support plates, both in transverse direction, i.e. with a direction of application of the stress substantially orthogonal to the printed layers, and in longitudinal direction, i.e. with a direction of application of the stress substantially parallel to the printed layers.

The compressive strength values were derived from the application of the formula:

$$\sigma = F/A$$

with A intended as the area in mm$^2$ of application of the stress and F the value in Newton of maximum stress that the sample is capable of undergoing.

Reported in Table 1 hereinbelow is the data obtained from the compressive strength tests on a sample obtained with the binder in accordance with the present invention, as specified above.

**Table 1**

| DIRECTION | AVERAGE COMPRESSIVE STRENGTH [*MPa*] | ± STANDARD DEVIATION [*MPa*] |
|---|---|---|
| TRANSVERSE | 8.26 | 1.61 |
| LONGITUDINAL | 9.29 | 1.88 |

The above-reported results were compared with the results obtained from compressive tests executed in the same conditions on cubic samples having the same size and obtained with the same printing process, using the same inert granular material but an inorganic air binder constituted by Sorel magnesic cement rather than the hydraulic binder according to the present invention.

More in detail, such comparison samples were obtained by mixing magnesium oxide with the granular material in order to obtain a granular mixture composed as follows: 20% by weight of magnesium oxide and 80% by weight of inert granular material.

The mixture was distributed on a work surface. On pre-selected areas of the powder bed, a dose of magnesium chloride hexahydrate ($MgCl_2 \cdot 6H_2O$) solution was sprayed, composed by weight as follows: 23% dry salts and 77% water.

Reported in Table 2 reported hereinbelow is the data obtained from the compressive strength tests on the sample obtained with the above-specified air binder.

**Table 2**

| DIRECTION | AVERAGE COMPRESSIVE STRENGTH [*MPa*] | ±STANDARD DEVIATION [*MPa*] |
|---|---|---|
| TRANSVERSE | 2.40 | 0.62 |
| LONGITUDINAL | 3.08 | 1.01 |

It was therefore possible to establish that hydraulic binder according to the present invention is characterized by an improved compressive strength with respect to an inorganic air binder, it too with magnesic base, of known type.

For greater clarity, the comparison between the obtained results is reported in the following Table 3.

**Table 3**

| BINDER | TRANSVERSE COMPRESSIVE STRENGTH [*MPa*] | σ MAGNESIUM PHOSPHATE CEM./ σ SOREL CEM. | LONGITUDINAL COMPRESSIVE STRENGTH [*MPa*] | σ MAGNESIUM PHOSPHATE CEM./ σ SOREL CEM. |
|---|---|---|---|---|
| Sorel Cement | 2.40 | | 3.08 | |
| Magnesium phosphate cement | 9.29 | 387.08 | 8.26 | 268.18 |

Further measurements were also executed in order to evaluate the porosity of the samples obtained with the binder with magnesium phosphate cement according to the invention and in order to compare the latter with the porosity of the samples obtained employing Sorel cement as binder.

The porosity, in fact, i.e. in general the ratio between the volume occupied by the pores, or voids, and the total volume of the material under examination, has an important effect in particular on the capacities of thermal and acoustic insulation, of mechanical strength and on the density of the obtained final manufactured item.

In particular, reported hereinbelow are the average values of porosity obtained for the samples with hydraulic binder according to the invention and with Sorel binder, where the porosity value is derived from the formula:

$$\text{Porosity} = 1 - (\rho_{GEOMETRIC} / \rho_{REAL})$$

where $\rho_{GEOMETRIC}$ is the density value of the material considered as the ratio between its mass, measured with balance, and its geometric volume, measured with caliper and $\rho_{REAL}$ is the density value provided by a helium pycnometer using fragments of the printed samples.

Reported in the following Table 4 is the porosity data, in percentage value, of the samples obtained with the hydraulic binder in accordance with the present invention, as specified above, and employing Sorel cement as binder.

**Table 4**

| BINDER | POROSITY [%] |
|---|---|
| Sorel Cement | 46.6 |
| Magnesium phosphate cement | 28.2 |

From the above-reported data, it is possible to observe that the use of a binder in accordance with the present invention allows obtaining manufactured items provided with a smaller porosity, i.e. more compact, and hence provided with improved mechanical strength and durability characteristics with respect to manufactured items obtained with known inorganic binders currently available on the market, such as Sorel cement.

The finding thus conceived therefore attains the pre-established objects.

Of course, in the practical achievement thereof, it can also assume shapes and configurations different from that illustrated above without departing from the present protective scope.

In addition, all details can be substituted by technically equivalent elements and the sizes, shapes and materials used can be of any type in accordance with the requirements.

**Claims**

1. Binder with magnesic base for the additive production of manufactured items, in particular made of conglomerate, adapted to be distributed on a layer of inert granular material in order to form a rigid matrix incorporating the granules of said inert granular material, **characterized in that** it is a substantially inorganic hydraulic binder with magnesium phosphate cement base.

**2.** Binder according to claim 1, **characterized in that** it comprises at least one phosphate and highly reactive magnesium oxide susceptible of reacting with each other in the presence of water.

**3.** Binder according to claim 2, **characterized in that** the highly reactive magnesium oxide is a powder magnesium oxide having average grain size less than 100 $\mu$m and/or a powder magnesium oxide obtained via calcination at temperatures lower than 1000°C.

**4.** Binder according to any one of the preceding claims, **characterized in that** it also comprises, as additive, at least one alkaline silicate adapted to form insoluble silicates in the final structure of the hardened matrix of magnesium phosphate cement.

**5.** Process for the additive production of manufactured items making use of a binder according to any one of the preceding claims, such process comprising:

    - a step of arranging:

        • an inert granular material;
        • powder magnesium oxide;
        • at least one powder phosphate;
        • at least one dose of water (11);

said powder magnesium oxide and said powder phosphate being susceptible of reacting in the presence of said at least one dose of water (11) in order to form a cement paste;
- a step of mixing at least said magnesium oxide with said inert granular material in order to obtain a powder granular mixture (4);
- a first step of distributing, on a work surface (5), a uniform layer of predetermined thickness of said granular mixture (4);
- a second step of distributing, on said work surface (5), said at least one phosphate;
- a step of selective impregnation of preselected areas of said layer with said at least one dose of water (11) in order to define a corresponding cross section of a desired manufactured item;
- repeating said first and second distribution step and said selective impregnation step until all the cross sections are defined of the desired manufactured item, obtaining a formed manufactured item.

**6.** Process according to claim 5, **characterized in that** said granular mixture (4) obtained from said mixing step comprises magnesium oxide in a percentage by weight comprised between 15% and 40% and granular material in a percentage by weight comprised between 40% and 85%.

**7.** Process according to claim 5 or 6, **characterized in that** it also comprises a step of solubilizing at least one first fraction of said at least one phosphate in said at least one dose of water in order to obtain an aqueous phosphate solution (11') that precedes said impregnation step, said second step of distributing said at least one phosphate being conducted simultaneously with at least said impregnation step, by depositing said aqueous phosphate solution (11') on pre-selected areas of said layer.

**8.** Process according to any one of the claims from 5 to 7, **characterized in that** in said mixing step, said magnesium oxide and at least one second fraction of said at least one phosphate are mixed with said inert granular material in order to obtain said granular mixture (4), said second step of distributing said at least one phosphate being conducted simultaneously with at least said first step of distributing said granular mixture (4), by distributing, on said work surface (5), a uniform layer of predetermined thickness of said granular mixture (4) comprising both said magnesium oxide and at least one second fraction of said at least one phosphate.

**9.** Process according to any one of the claims from 5 to 8, **characterized in that** it also comprises a step of thermal treatment of the formed manufactured item in order to lead to the formation of ceramic phases in the latter.

**10.** Use of a substantially inorganic hydraulic binder with magnesium phosphate cement base as binder for the additive production of manufactured items made of conglomerate by means of 3D printing, in particular by means of jetting technique.

# Fig. 1

# Fig. 2

1

3

11, 11'

4

10

12

13

13

5

4

2

Europäisches
Patentamt

European
Patent Office

Office européen
des brevets

## EUROPEAN SEARCH REPORT

Application Number

EP 17 15 7937

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/028787 A1 (CORP Z [US]) 8 April 2004 (2004-04-08) * abstract * * claims 1-3,10,11,13,15-19,28,55 * | 1,2,5,10 | INV. C04B28/00 C04B28/32 ADD. C04B111/00 |
| X | US 2015/315399 A1 (BREDT JAMES F [US] ET AL) 5 November 2015 (2015-11-05) * abstract * * claims 1,8,9,14,17-21 * | 1,2,10 3-9 | |
| A | | | |
| X | WO 2009/147627 A1 (MAN CHING WAH [CN]; LAU LAI KIT [CN]; LEADING CORPORATE LTD [CN]) 10 December 2009 (2009-12-10) * abstract * * claims 1-16 * | 1 | |
| A | WO 2009/037550 A2 (DINI ENRICO [IT]) 26 March 2009 (2009-03-26) * abstract * * page 5, line 31 - page 6, line 4 * * claims 1,5-8,11-13 * | 1-10 | |
| A | DE 10 2014 003103 A1 (CERAMIX AG [DE]) 11 December 2014 (2014-12-11) * abstract * * paragraph [0021] - paragraph [0023] * * paragraph [0046] - paragraph [0047] * * claims 1,20,23-26,35 * | 1-10 | TECHNICAL FIELDS SEARCHED (IPC) C04B |
| A | DE 10 2011 105688 A1 (HUETTENES ALBERTUS [DE]; VOXELJET TECHNOLOGY GMBH [DE]) 27 December 2012 (2012-12-27) * abstract * | 1-10 | |

-/--

The present search report has been drawn up for all claims

| Place of search | Date of completion of the search | Examiner |
|---|---|---|
| The Hague | 17 May 2017 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 15 7937

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 851 208 A1 (SIKA TECHNOLOGY AG [CH]) 25 March 2015 (2015-03-25) * abstract * * paragraph [0061] - paragraph [0062] * * claims 1,2,7-9,15 * ----- | 1-10 | |
| A | EP 1 475 220 A2 (FUJI PHOTO FILM CO LTD [JP]) 10 November 2004 (2004-11-10) * abstract * * paragraph [0159] - paragraph [0213] * * claims 1-3 * ----- | 1-10 | |
| A | US 2005/059757 A1 (BREDT JAMES F [US] ET AL) 17 March 2005 (2005-03-17) * abstract * * paragraph [0168] - paragraph [0173] * * claims 1-3,11,12,42,43 * ----- | 1-10 | |

|  |
|---|
| TECHNICAL FIELDS SEARCHED (IPC) |

The present search report has been drawn up for all claims

| Place of search | Date of completion of the search | Examiner |
|---|---|---|
| The Hague | 17 May 2017 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 17 15 7937

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2017

| Patent document cited in search report | | Publication date | Patent family member(s) | | Publication date |
|---|---|---|---|---|---|
| WO 2004028787 | A1 | 08-04-2004 | AU | 2003275083 A1 | 19-04-2004 |
| | | | CA | 2500012 A1 | 08-04-2004 |
| | | | EP | 1542858 A1 | 22-06-2005 |
| | | | HK | 1077541 A1 | 21-02-2014 |
| | | | JP | 4782424 B2 | 28-09-2011 |
| | | | JP | 2006504813 A | 09-02-2006 |
| | | | KR | 20050061478 A | 22-06-2005 |
| | | | US | 2004056378 A1 | 25-03-2004 |
| | | | US | 2006230984 A1 | 19-10-2006 |
| | | | WO | 2004028787 A1 | 08-04-2004 |
| US 2015315399 | A1 | 05-11-2015 | EP | 3140263 A1 | 15-03-2017 |
| | | | US | 2015315399 A1 | 05-11-2015 |
| | | | WO | 2015171639 A1 | 12-11-2015 |
| WO 2009147627 | A1 | 10-12-2009 | EP | 2297064 A1 | 23-03-2011 |
| | | | HK | 1128383 A2 | 23-10-2009 |
| | | | US | 2011073009 A1 | 31-03-2011 |
| | | | WO | 2009147627 A1 | 10-12-2009 |
| WO 2009037550 | A2 | 26-03-2009 | AU | 2008300316 A1 | 26-03-2009 |
| | | | CN | 101801624 A | 11-08-2010 |
| | | | EA | 201000743 A1 | 29-10-2010 |
| | | | EP | 2203286 A2 | 07-07-2010 |
| | | | US | 2010207288 A1 | 19-08-2010 |
| | | | WO | 2009037550 A2 | 26-03-2009 |
| | | | ZA | 201001097 B | 27-10-2010 |
| DE 102014003103 | A1 | 11-12-2014 | DE | 102014003103 A1 | 11-12-2014 |
| | | | DE | 102014003104 A1 | 11-12-2014 |
| DE 102011105688 | A1 | 27-12-2012 | BR | 112013032506 A2 | 21-02-2017 |
| | | | CN | 103702958 A | 02-04-2014 |
| | | | DE | 102011105688 A1 | 27-12-2012 |
| | | | EP | 2723697 A1 | 30-04-2014 |
| | | | JP | 5946526 B2 | 06-07-2016 |
| | | | JP | 2014516845 A | 17-07-2014 |
| | | | KR | 20140078584 A | 25-06-2014 |
| | | | US | 2014212677 A1 | 31-07-2014 |
| | | | WO | 2012175072 A1 | 27-12-2012 |
| EP 2851208 | A1 | 25-03-2015 | EP | 2851208 A1 | 25-03-2015 |
| | | | US | 2016244980 A1 | 25-08-2016 |
| | | | WO | 2015044046 A1 | 02-04-2015 |
| EP 1475220 | A2 | 10-11-2004 | EP | 1475220 A2 | 10-11-2004 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 17 15 7937

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2017

| Patent document cited in search report | Publication date | Patent family member(s) | Publication date |
|---|---|---|---|
| | | US 2004222549 A1 | 11-11-2004 |
| US 2005059757 A1 | 17-03-2005 | US 2005059757 A1<br>WO 2005023524 A2 | 17-03-2005<br>17-03-2005 |

For more details about this annex : see Official Journal of the European Patent Office, No. 12/82

EPO FORM P0459

page 2 of 2

**EP 3 210 949 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1358953
- IT 1395207